# EUROPEAN PATENT APPLICATION

(11) **EP 2 441 519 A2**
(43) Date of publication of application: **18.04.2012**
(21) Application number: 11184832.1
(22) Date of filing: 12.10.2011
(51) Int. Cl.: B01L 3/14

(54) **Security carrier**

(30) Priority: 12.10.2010 GB 1017143
(71) Applicant: Versapak Doping Control Limited, Erith Kent DA18 4AF (GB)
(72) Inventor: Sheehan, David, Bexley, Kent DA5 2HR (GB); Waller, Stephen, Erith, Kent DA18 4AF (GB)
(74) Representative: Brookes Batchellor LLP

(57) **Abstract**

A carrier (1) for a biological sample including a locking mechanism comprising: a first portion (52,152); a second portion (2,102); engagement means to engage said first (52,152) and second (2,102) portions together, said engagement means comprising: a pair of legs (62) extending away from a sidewall (54) of said first portion (52,152), each leg (62) including a distal hooked foot (66) facing the hooked foot (66) of the other member of the pair; a corresponding pair of opposed channels (12) provided in a sidewall of said second portion (2,102); a locking stud (14) provided between said pair of channels (12); the arrangement being such that with each leg (62) positioned within a corresponding channel (12), each leg (62) is retained in said respective channel by abutment of said hooked foot (66) against said locking stud (14).

## Description

This invention relates to a carrier suitable for holding a bottle or other container for a sample of liquid or solid material in a secure and tamper-evident manner.

The invention finds particular, but not exclusive, application in the protection of containers for biological samples, such as urine or blood samples taken in drug testing or "doping" procedures for athletes.

A sample taken for such purpose is divided and stored in two separate sample containers, one of which is used for laboratory testing. In the event of a positive doping test, the second sample is opened in the presence of witnesses and the testing repeated to confirm the positive result. Each sample container is typically a standard glass sample bottle or vial, having a conventional fastening cover such as a screw cap, a push cap or other suitable cover. Thus, there is a requirement to secure such a sample bottle in a tamper-evident fashion so that it is not possible to interfere with the sample once the sample bottle has been closed and sealed. Furthermore, there is a requirement that such sample bottles, which are often made of glass, are provided with some form of protection against fracture during transportation. Previously, such security and protection was provided using sealed security containers, such as that described in WO 94/04425. However, tampering techniques have become increasingly sophisticated, due to the impact of a confirmed positive result, and there is a need to provide a corresponding level of sophistication in anti-tampering protection.

It would be desirable to provide a light and easy to use carrier that can be closed securely around sample bottles in a tamper-evident fashion. In addition, it must be readily apparent on later inspection of the carrier if access to the contents of the carrier has been achieved. Furthermore, it would be desirable if such a carrier could provide protection for the sample bottle from damage during transportation.

Although the invention herein described is specifically directed to carriers for bottles containing biological samples, it should be understood that the invention has widespread application and may be used in other applications where the secure (ie tamper-evident) transportation of material is required.

Accordingly, in its broadest aspect, the present invention provides a two-part carrier adapted to hold a sample bottle in a manner such that the sample bottle, or the contents thereof, cannot be accessed without it being apparent on subsequent observation of the carrier that such access has occurred. The carrier further includes a locking mechanism to lock together the two parts of the carrier around the sample bottle.

The present invention additionally provides a locking mechanism.

The present invention in particular provides for a carrier for a biological sample including a locking mechanism comprising a first portion, for example a cover portion, a second portion, for example a base portion, and engagement means to engage the cover and base portions together. The engagement means comprise a pair of legs extending away from a sidewall of the cover portion, each leg including a distal hooked foot facing the hooked foot of the other member of the pair, a corresponding pair of opposed channels provided in a sidewall of said base portion, and a locking stud provided between the pair of channels. The arrangement is such that with each leg positioned within a corresponding channel, each leg is retained in a respective channel by abutment of its hooked foot against the locking stud.

Preferably the base is elongate, and the cover and base portions are adapted to receive a biological sample container into an interior volume, the cover engageable with the base to retain the sample container in tamper evident security.

Preferably each leg further includes a ledge, positioned opposite its hooked foot, for latching engagement with a corresponding shoulder of a corresponding channel.

Preferably the sidewall of the cover portion includes a shoulder, adjacent an open end of the cover portion, the pair of legs extending from the shoulder.

The shoulder may be positioned at the end of a groove present on an external surface of the cover sidewall.

The legs may be attached to the shoulder by a frangible connection.

The pair of legs may extend in a plane parallel to an internal sidewall surface of the cover portion, perpendicular to the shoulder.

The channels may be integral with the sidewall of the base portion.

The channels may be formed from curved walls positioned on the sidewall of the base portion.

The sidewall of the base portion may include a groove between the pair of channels.

The legs may extend from an internal sidewall of the cover portion and the channels may be formed on an internal sidewall of the base portion.

The locking stud may be integral with the base sidewall.

The locking stud may be formed from a surface of the base sidewall extending outwardly from the sidewall towards a closed end of the base portion.

The locking stud may include a shoulder, distal an open end of the base portion, for abutment with the hooked ends of the legs.

The shoulder may be shaped to retain the hooked ends, when the hooked ends are in abutment with the shoulder.

The locking stud may be shaped to deform the hooked feet out of a plane parallel to the sidewall of the cover during insertion of the legs into respective channels so as to allow the legs to pass over the locking stud and secure a snap fit engagement of the hooked feet with the shoulder of the locking stud.

The curved walls may be shaped and positioned to retain the legs in the channels, in a plane parallel to the sidewall of the cover portion, during insertion of the legs into the channels.

The legs may extend away from the cover portion in a plane parallel to the sidewall of the cover portion. In addition, the hooked feet may be deformable out of the plane to snap fit over the locking stud.

An end of the sidewall of the cover portion adjacent the open end may include at least one projection. In addition, the end of the sidewall of the base portion adjacent the open end may include at least one corresponding indentation, the arrangement being such that the projection may be co-operatively engageable with the corresponding indentation when the legs enter into the channels.

The projection may be arrow-head shaped, and the indentation may be an arrow-head shaped indentation.

The cover portion may include two pairs of legs, positioned at opposite sides of the cover, and the base portion may include corresponding pairs of channels and locking studs.

The cover portion may further include a skirt around the open end, the skirt comprising stronger portions on opposite sides of the cover, adjacent each of the two pairs of legs, and weaker portions on the remaining sides of the cover.

The stronger portion may be attached to the weaker portion by a frangible connection.

The weaker portion may be attached to the cover portion by a frangible connection.

The present invention further provides for a locking mechanism as set out above.

In order to promote a full understanding of the above and other aspects of the present invention, an embodiment will now be described, by way of example, with reference to the accompanying drawings in which:
Figure la shows a first side of a carrier in accordance with a first embodiment the present invention;
Figure 1b shows a second side of the carrier of Figure 1a;
Figure 1c shows a top-down view of the carrier of Figure 1a;
Figure 2 is a cross section of the carrier of Figure 1a along the line indicated by the reference A-A.
Figure 3a is a perspective view of the cover part of the carrier of Figure 1;
Figure 3b shows a detail of the cover part of Figure 3a, showing a first part of the locking mechanism;
Figure 4a is a perspective view of the base part of the carrier of Figure 1a;
Figure 4b shows a detail of the base part of Figure 4a, showing a second part of the locking mechanism;
Figure 5a shows a first side of a carrier, the cover locked to the base, in accordance with a second embodiment the present invention;
Figure 5b shows a second side of the carrier of Figure 5a;
Figure 5c is a cross section of the carrier of Figure 5a along the line indicated by the reference A-A;
Figure 5d is a top-down view of the carrier of Figure 5a,
Figure 6 shows the first part of the locking mechanism in accordance with a first embodiment securely engaged with the second part of the locking mechanism,
Figure 7 shows a further co-operative engagement means,
Figure 8(a) shows a detail of a first part of the locking mechanism in accordance with a third embodiment of the present invention,
Figure 8(b) shows a detail of a second part of the locking mechanism in accordance with a third embodiment of the present invention, and
Figure 8(c) shows a detail of the portion of the locking mechanism of figure 8(a) engaged with the portion of the locking mechanism of figure 8(b).

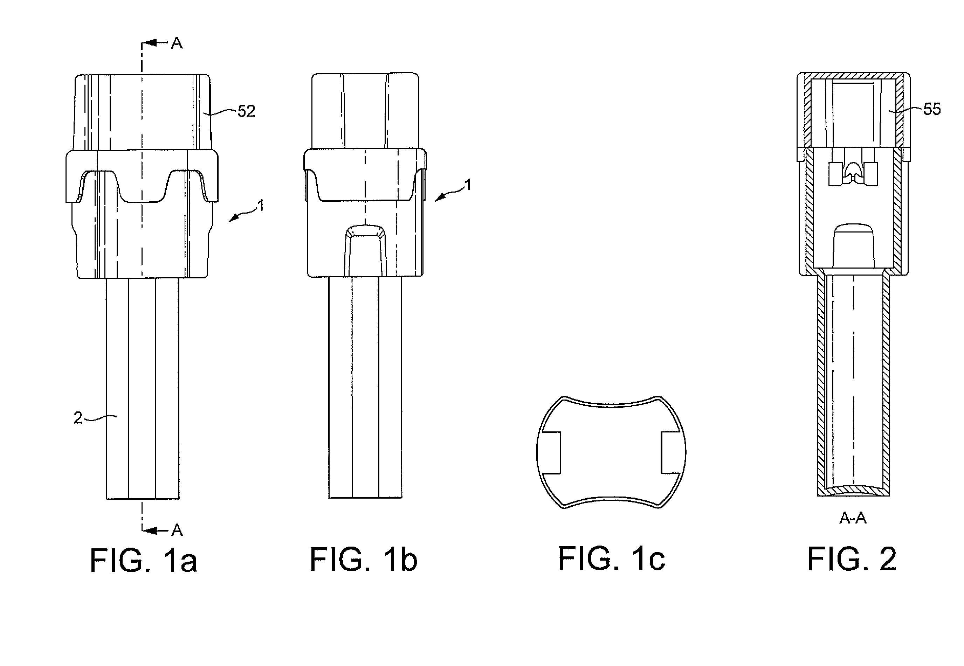

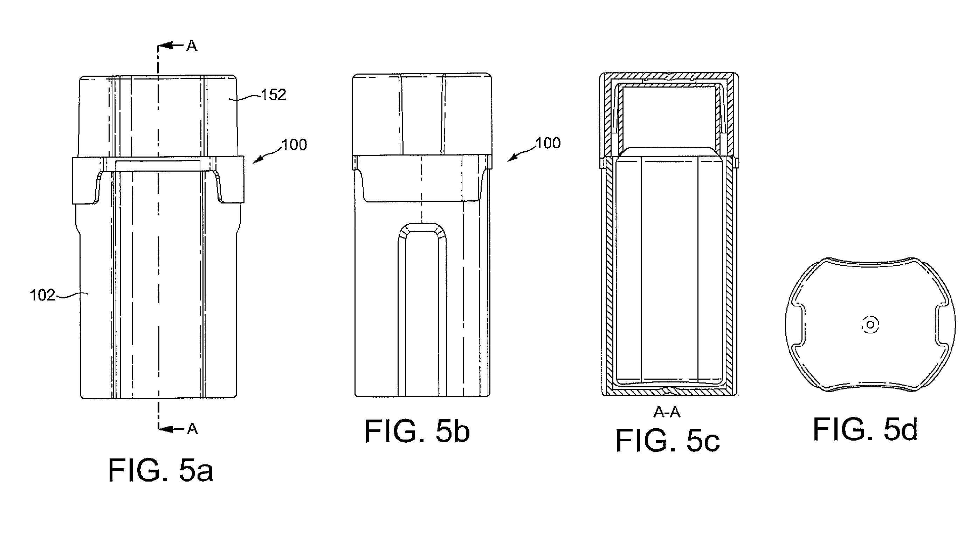

As seen in Figures 1a, 1b, 5a and 5b, the carrier 1, 100 comprises two parts referred to herein as the cover part 52, 152 and the base part 2, 102, although these labels are not intended to be limiting. In particular the cover part may in fact be the larger part and hold the bulk of the container to be carried, whereas the base part might be the smaller part provided to seal the container within the carrier. Each part contains a portion of the locking mechanism corresponding to the locking mechanism on the other part. Each part is moulded from a suitably tough and resilient plastic such as crystal styrene, styrene butadiene, acrylic or other suitable material using conventional moulding techniques such as injection moulding or other suitable techniques. It is contemplated that the material is transparent.

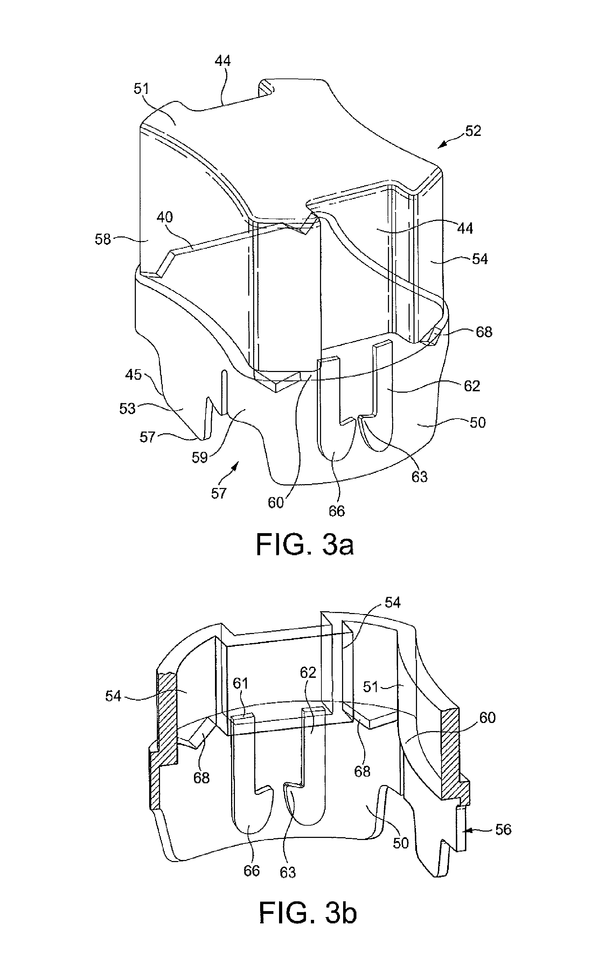

Figure 3(a) shows the cover part 52 of the carrier of Figure 1(a) in accordance with a first embodiment of the present invention. It is contemplated that similar features are present on the cover part 152 of Figure 5a. Figure 3(a) shows a cover part which is generally rectangular although other shapes are contemplated. Cover part 52 comprises a top 51, two pairs of opposing side walls 54, 58 and open end 57, said cover part 52 adapted to receive the end of a sample bottle (not shown). The cover part 52 may have a depth sufficient to completely enclose a top portion of a sample bottle contained within the carrier when the base and cover are engaged together. The precise internal shape of the cover part 52 may be determined according to the shape of any sample bottle to be carried.

Figure 3(a) further shows a first part of a locking mechanism, present on diametrically opposite side walls 54 around the cover, in accordance with a first embodiment of the present invention. It is, however, contemplated that this first part of the locking mechanism may be positioned on all internal sides of the cover, or on only one or on three.

The locking mechanism can be seen in more detail in Figure 3(b), which shows a plan view of an internal surface of side wall 54 of cover 52 including the first part 50 of the locking mechanism integral with the side wall 54. Side wall 54 of cover 52 includes a shoulder 60 from which extend, in a plane parallel to the plane of the internal surface of side wall 54, and in a direction perpendicular to the shoulder, a pair of legs 62. Each leg 62 includes a hooked end 66 distal shoulder 60, the hooked end of each leg of the pair approaching the hooked end of the corresponding other leg of the pair, such that a tip 63 of the hooked end of a first leg of the pair is adjacent a tip 63 of the hooked end of the second leg of the pair.

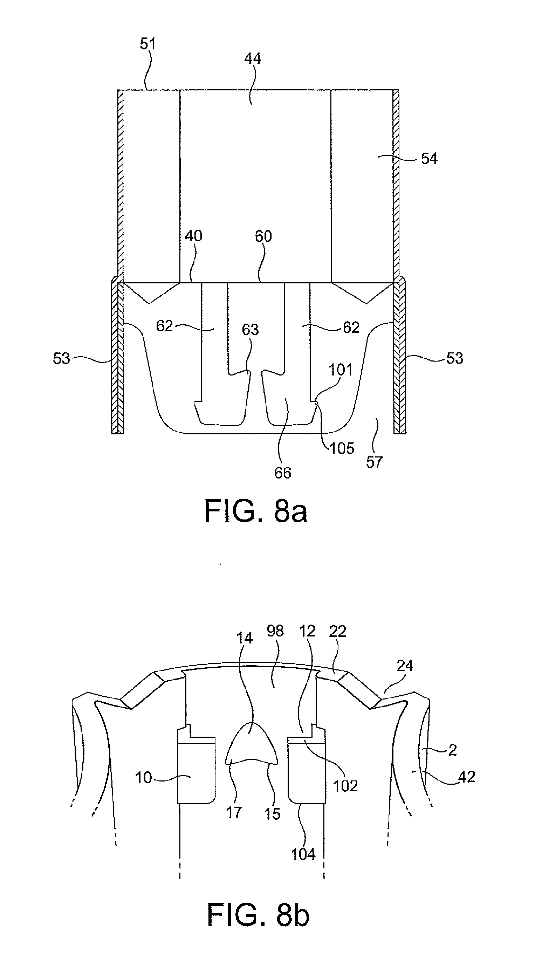

Figure 8(a) shows a plan view of a side of cover 52 of the carrier of Figure 1(a) in accordance with a third embodiment of the present invention. It is contemplated that similar features are present on the cover part 152 of Figure 5(a). The difference between the first and third embodiments resides in a feature of the legs 62.

The legs 62 or the third embodiment, as well as including all the features of the legs in accordance with the first embodiment, include an additional feature. In particular each leg 62 includes a ledge, 105, distal shoulder 60, extending outwardly away from hooked end 66 in the plane of the legs 62.

In both embodiments side wall 54 includes a groove 44 on an external surface of the cover, extending from closed end 51 towards open end 57, with an end wall comprising shoulder 60 upon which legs 62 are mounted. As well as being aesthetically appealing, the channel is useful as it positions legs 62 sufficiently close to opening 57 to readily access the second part of the locking mechanism on base 2, to prevent the weakening effect of longer length on legs 62, and to provide a better grip on cover 52, for example during disengagement.

As can be seen from Figures 3(a) and (b) each of respective side walls 54, 58 include a first portion provided to enclose and protect the top of a received sample bottle or container. Side walls 54, 58 include an end 40 distal closed end 51, shaped to accommodate a corresponding end of side walls 42 of base portion 2, and also include a respective second, extension portion 53, 59, each extending away from end 42 and closed end 51 in the same or parallel plane, as side walls 54, 58.

Each side wall extension 59 of side wall 54 extends below legs 62 of the first part of the locking mechanism and is sufficiently robust to protect legs 62 from unintentional damage. Each side wall extension 53 of side wall 58 is less robust and is attached to side wall extension 59 to form a continuous skirt 45 around open end 57 of cover 52. Extended side wall 53 joins extended side wall 59 at joint 56, which is weakened permitting the less robust skirt 45 portion formed by extended side wall 53 to snap when subj ect to force.

Skirt 45 may be the same depth all around the cover portion, or may have a varying depth, for example each sidewall extension 53, 59 may vary its depth along the side of the cover such that a shallow portion of sidewall extension 53 of skirt 45 joins a shallow portion of sidewall extension 59, rendering the frangible connection easier to break, as it is shorter. The deep portion of each sidewall extension is positioned intermediate the shallow portions in the middle of the side wall.

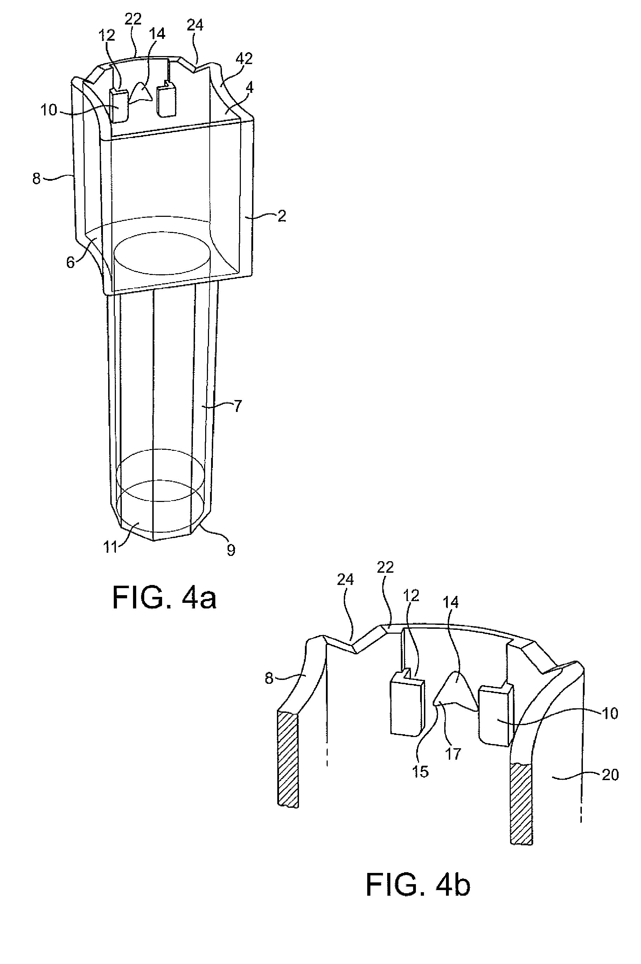

Figure 4(a) shows a base portion 2 of the carrier of Figure 1(a) although it is contemplated that similar features are present on base portion 102 of Figure 5(a). Base part 2 comprises a closed end 9, side walls 7, 8, and an open end 4. Figures 1(a) and 1(b) show side walls comprising a wide first portion 8 adjacent said open end 4 and a narrow second portion 7 adjacent said closed end 9. Figures 5(a) and 5(b) show side walls of the base portion 102 having a more uniform width. Both Figures show a base portion with an open end shaped to receive a generally rectangular cover portion, although it may be adapted to accommodate a cover of any suitable shape. Side wall 8 includes an end 42 adjacent opening 4 shaped to accommodate a corresponding end 40 of side walls 54, 58 of cover portion 52. The closed end 9 and side walls 7, 8 are shaped so as to fit snugly around a sample bottle (not shown). The base portion 2 may contain protective padding 11 as described below.

Figure 4(a) further shows a second part of a locking mechanism, present on the internal surface of diametrically opposite sides around the base 2, in accordance with the first embodiment of the present invention. It is contemplated that the second part of the locking mechanism may be positioned the internal surface of each side, or only one or on three. Figure 4(b) shows a detail of side wall 8 of base 2, in particular an internal surface of side wall 8 including the second part 20 of the locking mechanism of the first embodiment integral with the side wall 8.

The second part 20 of the locking mechanism includes a pair of opposing curved walls 10, each curved wall providing a channel 12, which faces the channel of the corresponding member of the pair. A portion 17 of the internal surface of the side wall 8, intermediate the pair of curved walls 10, slopes outwardly towards closed end 9 of base 2 to form a locking stud 14. Locking stud 14 further includes a shoulder 15 extending from the sloped surface 17 of the stud 14 towards the remaining side wall 8 and away from the internal volume of the base 2.

Figure 8(b) shows a plan view of a side of the base part 2, showing a second part of a locking mechanism in accordance with a fourth embodiment of the present invention. The fourth embodiment is similar to the first and third embodiments but includes the feature that the sidewall of the base portion containing the channels includes a thinner portion, indentation, or groove 98 between the channels, extending from the open end 4 of the base portion to below the channels. The sidewall including the channels may also curve outwardly in which case the cover portion curves outwardly in a corresponding fashion. In addition the plane parallel to the plane of the sidewall is now more accurately described as a curve or a flexed plane which follows the curved path of the curved sidewall. In particular, legs 62 described as present in a plane parallel to the plane of the sidewall may now be described as occupying a flexed plane matching the curve of the sidewall.

Channels 12 are formed from curved walls 10 integral with the sidewall of the base portion; in particular they also include the indented or grooved wall of the base portion 2. The groove aids in the location of the legs into the channels, and also allows for play of the legs while insertion is being accomplished, to avoid the insertion process breaking the legs.

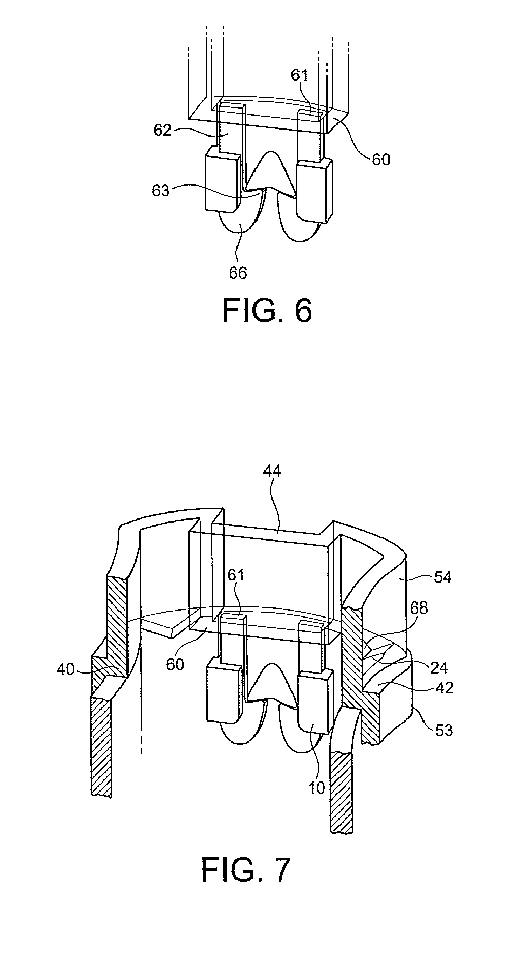

As can be seen from figures 6 and 7, curved walls 10 are positioned on side walls 8 of base portion 2 so as to correspond with the position of legs 62 on side walls 54 of cover 52, such that with the open end 57 of cover 52 urged towards open end 4 of base 2, legs 62 enter into channels 12. In particular the channels and legs are sized such that the legs fit snugly into channels 12. Locking stud 14 is positioned such that sloped surface 17 begins to extend away from the internal wall of the base portion slightly below a top 102 of curved wall 10. This allows the legs to be securely contained within channels 12 before hooked ends 63 of legs 62 begin to distort due to sloped surface 17.

Once fixed in place in channels 12 legs 62 proceed through channels 12 and are held in place while hooked ends 66 of legs 62 are urged out of the plane, or flexed plane, parallel to the internal surface of side wall 54, and into the interior volume of the carrier 2, twisting or otherwise distorting the orientation of legs 62 to accommodate the sloped surface of locking stud 14. Legs 62 are thereby held firmly within channels 12 while cover 52 of carrier 1 is engaged with base 2.

With cover 52 urged towards base 2, hooked ends 66 pass the point of the sloped surface of stud 14 furthermost from open end 4 and snap into position beneath shoulder 15. Legs 62 return to their original orientation in the plane, or flexed plane, parallel to the internal surface of sidewall 54 and are held securely in place by abutment of hooked ends 66 against shoulder 15 of stud 14. Shoulder 15 of stud 14 may be shaped complimentary to the shape of hooked ends 66, for example shoulder 15 may be shaped to receive an arrow-headed shape, to more securely retain legs 62 in position. Channels 12 also assist in preventing legs 62 snapping while cover 52 is engaging with base 2, by preventing the distortion of legs, in accommodating locking stud 14, from applying pressure on weakened end 61 of legs at the joint of legs 62 and shoulder 60, and snapping them during the attachment process.

Any attempt to remove cover 52 from base 2 is prevented by abutment of hooked ends 66 against shoulder 15, said hooked ends 66 being further retained against said shoulder 15 by the curved walls 10 holding legs 62 within channels 12.

In accordance with the third embodiment, shown in Figures 8(a) - (c), each leg 62 includes a further feature to assist in the secure attachment of the cover to the base portion. The further feature comprises a ledge 105, distal frangible point 61, and on an opposite side of each leg to the foot or hooked end 66. With the cover portion engaged with the base portion, each leg of the third embodiment extends below the curved sidewall 10 towards the closed end 9 of the base portion. In this position an upper surface 101 of the ledge 105 of the legs of the third embodiment provides for a latching engagement between shoulder 104 of the base of curved sidewall 10, providing a further secure engagement of each leg within channels 12.

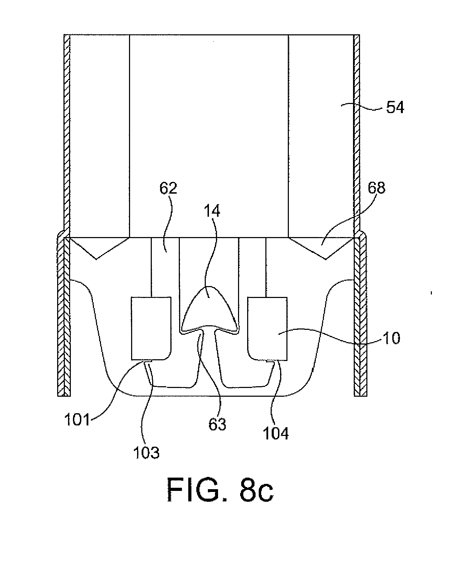

Legs 62 are held in channels 12 by curved walls 10, and groove 98, if present, in the sidewall of the base portion between the channels provides additional space for hooked ends 66 to flex over locking stud 14 while legs 62 are being inserted into channels 12. As can be seen in particular in Figure 8 (c), with hooked ends 63 of legs 62 snap-fitted onto locking stud 14 and held in place not least by the shaped shoulder 15 of the stud, upper surface 101 of ledges 105 engage with shoulder 104 of curved walls 10 to further secure each leg in place. The shaped shoulder 15 of the stud ensures that when the cover is pulled away from the base hooked ends 63 of legs 62 are urged into the shoulder rather than passing over the shoulder and out of the channels 12.

As stated, end 40 of side walls 54 is generally shaped to accommodate end 42 of side walls 8, both being generally flat. In each case, however, an additional feature has been provided, the feature present on end 40 being shaped to co-operate with the feature on end 42. In particular Figures 3(a) and (b) shows the feature 68 to be an arrow-head-shaped projection extending away from the surface of end 40. Figures 4(a) and (b) show the corresponding feature 24 on end 42 of base 2 to be an arrow-head-shaped indentation. In each case feature 68, 24 is positioned at end 40, 42 adjacent respective first 50 and second 20 portions of locking mechanism. This may be seen in detail in Figure 7.

With the first part 50 of the locking mechanism engaged with the second part 20 of the locking mechanism, projection 68 of the cover 52 is received into indentation 24 of base 2, and assists in guiding the cover into the correct position on the base. The cover is then securely retained on the base. Pulling the cover 52 away from the base 2 in a direction parallel to the plane of the legs 62 and side walls 54 urges the hooked ends 66 more firmly against the shoulder 15. Channels 12 further prevent legs 62 moving apart to release the locking mechanism.

In addition, in accordance with the third embodiment, top surface 101 of ledge 105, in abutment with shoulders 104 of curved walls 10, further retain legs in place and prevent legs moving apart.

Rotating the cover 52 relative to the base 2 urges projection 68 out of indentation 24 and urges the cover 52 away from base 2, exerting a force on skirt 45 urging the skirt out of position. The less robust skirt portion 53, extending from side wall 58 of cover 52, snaps away from the more robust skirt portion 59, extending from side wall 54 of cover 52, at weakened joint 56. In addition, the less robust skirt portion 53 may also snap away from cover 52, under action of such a force. Also during this process one of the pair of legs 62 is urged against the curved wall 10 of channel 12, the other of the legs being urged out of channel 12 and against locking stud 14. This causes a force to be transmitted along the legs 62 to the point 61 at which legs 62 join shoulder 60. The point at which the ends 61 of legs 62 join shoulder 60 is deliberately weakened so that the force exerted on the legs by the rotating action snaps the legs at the weakened points 61.

In accordance with the third embodiment upper surface 101 of ledge 105 of one leg 62 is urged against shoulder 104 and against an internal sidewall of curved wall 10, which force is also transmitted along legs 62 to snap the legs at weakened point 61. Legs 62 may then fall into the internal volume of base 2. A clean break results in visible holes positioned on shoulder 60 where legs 62 were mounted.

It is therefore visible and apparent when the cover 52 has been removed from the base 2, both by the absence of the portion 53 of skirt 45, and by the presence of holes in shoulder 60 where the legs 62 should be. Thus access to the contents of the carrier may only be achieved by breaking legs 62 at point 61, which can be seen on cursory inspection of cover 52, which will lack legs 62, 64, or by cursory inspection of base 2, which may show legs 62 securely engaged within channels 12, or having fallen into the base portion.

Attempts may be made to access the contents of the carrier; however the security arrangements of the present invention are direct to preventing success. In particular attempts may be made to remove the legs from engagement with shoulder 15 of locking stud 14. With the cover 52 locked to the base 2, portion 59 of skirt 45 of cover 52 and sidewall 8 of base 2 provide two protective walls preventing access to legs 62. Should unscrupulous access to the legs 62 succeed, hooked ends 66 must be disengaged from shoulder 15. While it may be possible to first urge cover 52 and base 2 together to so disengage hooked ends 66, legs 62 would need to be urged apart to avoid re-engagement on separating cover 52 from base. This is prevented by curved walls 10 which retain legs 62 in channels 12. In addition, ends of legs 62 would need to be rotated away from surface 15 of locking stud 14 which actions would be very difficult to achieve. In accordance with the third embodiment engagement of ledge 105 with shoulder 104 would render such detachment even more difficult, as legs 62 would need to be rotated to avoid surface 15 of stud 14, which rotating action would urge ledge 105 into further secure engagement with shoulder 104.

Carrier 1 may additionally include further features to render the carrier easy to handle, transport and store. In addition to the generally rectangular shape the carrier may include ridged surfaces or indentations to allow for easy grip. The carrier may also include sides which have external surfaces which are curved or include channels. For example side wall 58 of cover 52 may be bowed inwardly, or have some other suitable or desirable shape.

As mentioned above, the carrier 1 preferably contains protective padding 11 which ensures that the contents, for example a sample bottle (not shown) is held tightly in the carrier 1 and provides protection for such a sample bottle against knocks, for example caused by dropping the carrier 1 or by rough handling during transportation. Either or both parts 2, 52 of the carrier 1 may contain the padding 11 although in a preferred embodiment the padding is contained only in the base part 2. The protective padding 11 may be made from any suitable padding material, for example, a foam material such as foamed polystyrene or plastic, or rubber or cork. It is contemplated that the padding provides a resilient force on a received sample bottle, such that when cover 52 is removed such a sample bottle is urged away from the base 2 to promote ease of access. Consequently there is no need to invert the carrier or use any other means to gain access to the sample bottle which may disturb the contents.

As can be seen from Figure 1(a) and 1(b), a carrier may need to accommodate a sample such as a bottle which is very narrow, in which case base 2 includes a wide top portion adapted to engage with cover 52, and a narrower bottom portion which fits snugly around the narrow bottle. Such narrow bottles are usually employed for storage and transport of a blood sample. In addition a carrier may need to accommodate a sample such as a bottle which is not so narrow, in which case base 2 may have a uniform wider width. Such bottles are usually employed for storage and transport of a urine sample or other matter. Both types of sample may be accommodated by the carrier of the present invention, indeed other samples may be accommodated also, for example faeces, hair or other matter.

In use, a sample to be securely retained in a container, for example a bottle, may be placed in the base portion 2 of carrier 1. If the sample container is sufficiently small protective padding 11 made from a resilient material may be placed in the closed end of base portion 2. Open end 57 of cover portion 52 may be placed over open end 4 of base portion 2, to cover the top of such a container, and moved towards base portion 2. The sample container is thereby urged against protective padding 11 and projection 68 on end 40 urged towards indentation 24 on end 42. Projection 68 engages with indentation 24 thereby guiding cover 52 into a correct position covering open end 4 of base 2 and protecting weakened ends 61 of legs 62 from unintentional damage. Legs 62 of a first portion of locking mechanism 50, positioned on diametrically opposite sides of internal surfaces side walls 54 of cover 52, may enter into channels 12 created by curved walls 10 positioned on corresponding internal side walls of base 2, while skirt 45 of cover 52 slides over the outside of side walls 8 of base 2. As cover 52 is urged towards base 2 legs 62 enter further into channels 12 and hooked ends 66 of legs 62 are urged out of the plane parallel to the internal surface of side walls 54, by action of sloped surface 17 of locking stud 14. With legs 62 fully engaged with channels 12, hooked ends 66 snap back into position and abut shoulder 15 of locking stud 14.

In accordance with a second embodiment channels 12 are comprised of curved walls 10, and the base portion sidewall includes a groove 98 to further assist in positioning of the legs 62 in the channels, providing a larger space for the hooked ends to flex into position and snap-fit onto the locking stud 14. Optionally, in the third embodiment, ledges 105 positioned on a side of each leg opposite hooked and 66, snap under shoulder 104 of curved walls 10 to further secure legs in position.

With the locking mechanism engaged, and skirt 45 extending over the outside surface of base side walls 8, the container for the sample is held securely within the carrier. The sample is thus easy to handle and store and is light for ease of transport. In addition several features prevent unauthorised access to the container held within the carrier.

When it is desired to access the contents of the carrier, the simple act of pulling the cover from the base will not suffice, as such action merely urges the hooked ends 66 of legs 62 of the first part 50 of the locking mechanism on cover 52 more firmly against shoulder 15 of the second part 20 of the locking mechanism on base 2. In addition, in accordance with the third embodiment, upper surface 101 of ledges 105 are urged more firmly against shoulders 104 of curved walls 10. The hooked ends are prevented from moving away from shoulder 15 by the shape of shoulder 15 and by secure engagement of legs 62 within channels 12, and in accordance with the third embodiment, by latching engagement of upper surface 101 of ledge 105 with shoulders 104.

Access may be achieved and the cover removed by rotating cover 52 relative to base 2. Projection 68 is thereby urged against the side of indentation 24 urging cover 52 away from base 2. Shoulder 15 is also urged against hooked ends 66 urging legs 62 away from shoulder 60 while legs 62 are urged against curved walls 10, both forces exerted on weakened portion 61 of legs 62 to assist in snapping the legs 62 from shoulder 60 at weakened position 61. The presence of ledge 105 may also act on weakened point 61 to snap legs from shoulders 60. In addition an edge of side wall 8 of base 2 is urged against portion 53 of skirt 45, assisting in snapping portion 53 of skirt 45, both from portion 59 of skirt 45 and from the cover 52.

It is therefore easy to see, on cursory inspection, that the contents of the carrier have been accessed. It would be difficult to avoid detection of attempts to tamper with the contents of the carrier due to the presence of the double skin provided by robust skirt portion 59 and side wall 8, by the difficulty of removing the legs 62 from the shoulder 15 of locking stud 14 while the legs are retained within channels 12, and by the difficulty of removing the cover 52 from base 2 without snapping portion 53 of skirt 45.

Thus when the contents of the carrier has been accessed it is immediately apparent on the most cursory inspection, as a portion of skirt 45 will not be present and legs 62 will have snapped off shoulder 60 of cover 52, leaving visible holes on shoulder 60. Channels 44 focus the eye on shoulder 60 and any such visible holes. Broken off portions of legs 62 may also be present in base 2. Fraudulent access may be detectable by any of these features and thus any tampering with the contents of the carrier may be easily identified and the contents may be securely stored, handled and transported by the carrier of the present invention with confidence.

Channels may be provided in the base sidewall, as seen in figures 1(a), 1 (b) and 5(b), which extend from the closed end of the base portion to near the base portion of the locking mechanism. A surface of this channel adjacent the locking mechanism is curved to deter attempts to release the hooked ends 63 or ledges 105, from the locking stud or channel shoulders respectively.

It is contemplated that a base may be re-useable, such that second, third or more lids may be provided for use with the base, either to re-use the base or to continue to transport and/or store the sample in a convenient manner. Subsequent lids may be different colours or have other distinguishing features to indicate the stage of processing of a sample contained therein. It is also contemplated that the top and base be uniquely numbered as a further means to detect tampering, any mismatch indicating possible fraudulent access.

The present disclosure provides for a biological sample, for example a sample taken from an athlete or individual to ensure no illegal or otherwise undesirable substance has been consumed or otherwise used, may be stored for future checking. The sample is deposited into a vial or other container and the container inserted into the base portion of the carrier. A lid is engaged with the base and a note is made of the identity of the base and cover such that any change of cover will be recognisable. The present disclosure further provides for the sample, in the vial or container, to be accessed at a later date with confidence that the sample is an accurate reflection of the contents of the biological sample when originally stored, and that any tampering, or attempted tampering, with the content of the container will be readily detectable.

The present invention is not limited to the described embodiments but rather includes all such modifications, variations and equivalents that fall within the scope of the invention as defined in the accompanying claims. In particular the sample contained within the carrier may not be a biological sample but may be any sample which needs to be stored securely in a tamper-evident manner for potential future checking.

In addition, it is contemplated that for a generally rectangular carrier, the locking mechanism is positioned on each of the short side walls of the carrier 1, 100 however the locking mechanism may be positioned on each of the long side walls, or on a respective short and long side walls. The carrier is not limited to a rectangular shape but may be any suitable shape.

The side walls 54 of cover 52 are described as having sufficient depth to completely conceal a top portion of a bottle contained within the carrier, however padding may be provided to allow accommodation of a bottle of a shorter length, in which case the top portion acts to securely enclose such a bottle such that it is readily apparent on later inspection of the carrier if access to the contents of the carrier has been attempted or achieved. The internal shape of the carrier base or cover may be shaped dependent on the shape of the bottle or container to be carried. In addition the internal shape of the carrier base or cover may be rectangular or may be any suitable shape to receive a variety of sample bottles. If the internal shape is not rectangular the locking mechanism may be placed diametrically opposite each other around the internal surface of the carrier base and cover. A sample container may be any shape and may include a screw top or any other kind of top, for example a sealed top which can itself indicates that access to the contents has occurred.

Ends 40, 42 of side walls may be generally flat, or may be some other suitable shape. The features 68, 24 on respective sidewalls may be any suitable shape and are not limited to the complementary arrow-shaped projections and indentations set out above.

As described, the legs of the locking mechanism are in a plane parallel to the relevant sidewall of cover 52. As also discussed, the relevant sidewall may be curved. All references to the legs being in the plane of the sidewall, or flexed plane, refer to the legs being a fixed distance from the sidewall at all points, such that the legs fix into place in channels 12 and the relevant sidewall of the base portion is received into the gap between the legs and the sidewall of the cover portion, in a snug fit which consists in retaining the locking mechanism in place while protecting the legs from damage.

While the material of the carrier may be transparent, other non-transparent material may be used.

The external shape of the carrier may be functional and/or may be arranged for aesthetic appeal.

## Claims

1. A carrier for a biological sample including a locking mechanism comprising:
a first portion;
a second portion;
engagement means to engage said first and second portions together, said engagement means comprising:
a pair of legs extending away from a sidewall of said first portion, each leg including a distal hooked foot facing the hooked foot of the other member of the pair;
a corresponding pair of opposed channels provided in a sidewall of said second portion;
a locking stud provided between said pair of channels;
the arrangement being such that with each leg positioned within a corresponding channel, each leg is retained in said respective channel by abutment of said hooked foot against said locking stud.

2. A carrier as claimed in claim 1, wherein one of said first or second portions is elongate.

3. A carrier as claimed in claim 1 or claim 2, wherein said first and second portions are adapted to receive a biological sample container into an interior volume, said first portion engageable with said second portion to retain said sample container in tamper evident security.

4. A carrier as claimed in claim 1, wherein each leg further includes a ledge, positioned opposite said hooked foot, for latching engagement with a corresponding shoulder of a corresponding channel.

5. A carrier as claimed in claim 1, wherein said sidewall of said first portion includes a shoulder, adjacent an open end of said first portion, said pair of legs extending from said shoulder.

6. A carrier as claimed in claim 5, wherein said shoulder is positioned at the end of a groove present on an external surface of a sidewall of said first portion, and/or wherein said legs are attached to said shoulder by a frangible connection, and/or wherein said pair of legs extend in a plane parallel to an internal sidewall surface of said first portion, perpendicular to said shoulder.

7. A carrier as claimed in claim 1, wherein said channels are integral with said sidewall of said second portion, and/or wherein said channels are formed from curved walls positioned on said sidewall of said second portion.

8. A carrier as claimed in claim 7, wherein said sidewall of said second portion includes a groove between said pair of channels.

9. A carrier as claimed in claim 1, wherein said locking stud is integral with said sidewall of said second portion, and/or wherein said locking stud is formed from a surface of said sidewall of said second portion extending outwardly from the sidewall towards a closed end of the second portion..

10. A carrier as claimed in claim 1, wherein said locking stud includes a shoulder, distal an open end of said second portion, for abutment with said hooked ends of said legs, wherein with said hooked ends in abutment with said shoulder, said shoulder is shaped to retain said hooked ends.

11. A carrier as claimed in claim 10, wherein said locking stud is shaped to deform said hooked feet out of a plane parallel to the sidewall of the first portion during insertion of the legs into respective channels so as to allow the legs to pass over said locking stud and secure a snap fit engagement of said hooked feet with said shoulder of said locking stud.

12. A carrier as claimed in claim 11, wherein said curved walls are shaped and positioned to retain said legs in said channels, in a plane parallel to said sidewall of said first portion, during insertion of said legs into said channels, and/or wherein said legs extend away from said first portion in a plane parallel to said sidewall of said first portion and wherein said hooked feet are deformable out of said plane to snap fit over said locking stud.

13. A carrier as claimed in claim 1, wherein an end of said sidewall of said first portion adjacent said open end includes at least one projection, and wherein an end of said sidewall of said second portion adjacent said open end includes at least one corresponding indentation, the arrangement being such that said projection is co-operatively engageable with said corresponding indentation when said legs enter into said channels.

14. A carrier as claimed in claim 1, wherein said first portion further includes a skirt around said open end, the skirt comprising stronger portions on opposite sides of the first portion, adjacent each of the two pairs of legs, and weaker portions on the remaining sides of the first portion, and wherein said stronger portion is attached to said weaker portion by a frangible connection, and wherein said weaker portion is attached to said first portion by a frangible connection.

15. A locking mechanism as set out in any of the preceding claims.
